# NOUVEAU FASCICULE DE BREVET EUROPEEN

(11) **EP 2 822 389 B2**
(45) Date de publication et mention de la décision concernant l'opposition: **06.07.2022**
(45) Mention de la délivrance du brevet: 27.04.2016
(21) Numéro de dépôt: 13711082.1
(22) Date de dépôt: 28.02.2013
(51) Int. Cl.: A21C 1/06, A21C 1/14, B01F 7/00

(54) **MACHINE À PÉTRIR EN CONTINU UNE PÂTE POUR PRÉPARATION BOULANGÈRE OU PÂTISSIÈRE TELLE QUE DU PAIN DE MIE**
MASCHINE ZUM KONTINUIERLICHEN KNETEN EINES TEIGS FÜR BACKWAREN ODER BROTMISCHUNGEN, Z. B. FÜR EIN SANDWICHBROT
CONTINUOUS DOUGH KNEADING MACHINE FOR PASTRY OR BREAD MIXES, SUCH AS FOR SANDWICH BREAD

(30) Priorité: 05.03.2012 FR 1251981
(43) Date de publication de la demande: 14.01.2015
(73) Titulaire: VMI, 85600 Montaigu (FR)
(72) Inventeur: CHEIO DE OLIVEIRA, José, F-85600 St Hilaire de Loulay (FR); DUGAST, Dominique, F-44140 Remouille (FR); COPPENOLLE, Philippe, F-85600Montaigu (FR); CHAILLOU, Emmanuel, F-85800 Le Fenouiller (FR); RICARD, Pascal, F-85600 Treize Septiers (FR)
(74) Mandataire: Germain Maureau
(86) Numéro de dépôt international: PCT/FR2013/050427
(87) Numéro de publication internationale: WO 2013/132175

(56) Documents cités:
- EP-A1- 0 682 875
- EP-A1- 0 919 127
- EP-A1- 2 481 289
- DE-T2- 69 520 167
- FR-A1- 2 618 643
- ELSNER G. et al: "?Kontinuierliches Kneten von Frischbackteigen bei verschiedenen Gasdrücken (Vakuumüberdruck", ?Getreide, Mehl und Brot, vol. 3, 1991, pages 78-81,

## Description

La présente invention se rapporte au domaine de la boulangerie/pâtisserie industrielle, et concerne une machine de pétrissage de pâte à pain de mie.

Comme cela est connu en soi, le pétrissage permet de dérouler les protéines qui se trouvent dans la farine, afin d'en faire des filaments enchevêtrés capables d'emprisonner les gaz issus de la fermentation provoquée par les levures.

Pour fabriquer du pain de mie, on cherche à obtenir dans la mie la plus grande densité de bulles, c'est-à-dire les bulles les plus petites possible avec les parois les plus fines possible.

Pour arriver à ce résultat, on connaît de la technique antérieure des machines à pétrir la pâte destinée à la fabrication du pain de mie, dans lesquelles on réalise le pétrissage sous vide: de telles machines, commercialisées notamment sous la marque Tweedy ^{®} par la société britannique APV Baker (www.apvbaker.com), comportent typiquement des cuves de pétrissage dans lesquelles la pâte à pétrir est introduite par lots, et des moyens pour faire le vide dans la cuve pendant le pétrissage.

Il s'avère en effet que le pétrissage sous vide permet de réduire la taille et d'augmenter la concentration des bulles de gaz engendrées par la fermentation de la pâte : la présence de vide permet en effet de resserrer le maillage formé par les protéines déroulées de la farine, et d'éviter ainsi que les bulles de gaz de très petite taille issues de la fermentation ne s'échappent de la pâte.

Bien que satisfaisant, ce procédé de pétrissage par lots présente des limites inhérentes à son caractère discontinu : en particulier, on ne peut pas atteindre de cadences de production très élevées.

S'agissant de cadences élevées de pétrissage de pâte pour la boulangerie/pâtisserie industrielle, on connaît différentes machines de pétrissage en continu : les ingrédients, tels que la farine et l'eau dans le cas de la fabrication de pâte à pain, arrivent en continu à l'intérieur d'un mélangeur ou fraseur, de manière à former une pâte qui tombe ensuite à l'intérieur d'une cuve munie d'une ou plusieurs vis sans fin. En tournant, ces vis pétrissent la pâte qui avance en continu vers une extrémité de sortie de la cuve.

Ces machines de pétrissage en continu sont toutefois impropres au pétrissage sous vide, de par les différents passages d'air qui existent notamment à l'entrée et à la sortie de ces machines, et qui sont inhérents à la conception de ces machines.

Le document EP-A-0 919 127 décrit une machine selon le préambule de la revendication 1.

J La présente invention a ainsi notamment pour but d'adapter une machine de pétrissage en continu au pétrissage de la pâte pour pain de mie.

On atteint ce but de l'invention, ainsi que d'autres qui apparaîtront à la lecture de la description qui va suivre, avec une machine selon la revendication 1.

Grâce à ces caractéristiques, la pâte à pétrir obture de manière étanche tant l'entrée que la sortie (de par l'étranglement) de la sous-chambre aval, de sorte que les moyens de dépression permettent de réaliser le vide à l'intérieur de cette sous-chambre.

On peut ainsi pétrir la pâte de manière continue et sous vide, ce qui permet d'obtenir de la pâte notamment pour pain de mie à cadences importantes.

Suivant d'autres caractéristiques optionnelles de la présente invention :
- lesdits organes de convoyage sont des vis sans fin, et lesdits organes de pétrissage sont des plats de pétrissage ;
- lesdits moyens de dépression comprennent un alésage fileté communiquant avec ladite chambre aval, une vis montée dans ledit filetage avec un léger jeu, et des moyens d'aspiration de l'air se trouvant dans ce jeu.

D'autres caractéristiques et avantages de la présente invention apparaîtront à la lumière de la description qui va suivre, et à l'examen des figures ci-annexées, dans lesquelles :
- les figures 1 et 2 représentent des vues, respectivement en coupe axiale et en perspective arrachée, d'une machine à pétrir en continu selon l'invention,
- la figure 3 représente une vue en perspective de deux arbres rotatifs situés à l'intérieur de cette machine,
- la figure 4 représente une vue en coupe axiale d'un fraseur destiné à coopérer avec la machine à pétrir en continu selon l'invention, et
- la figure 5 est une vue en perspective de l'arbre de mélange de ce fraseur.

Sur l'ensemble de ces figures, des références identiques ou analogues représentent des organes ou ensembles d'organes identiques ou analogues.

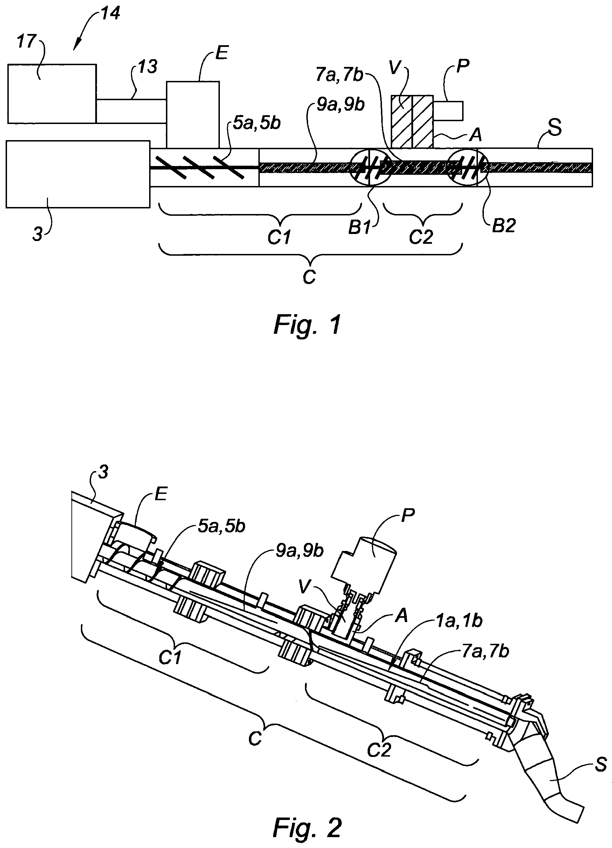

Comme on peut le voir sur les figures 1 et 2, la machine selon l'invention comprend une chambre C de section sensiblement tubulaire, pouvant être formée par exemple en acier inoxydable.

Cette chambre C se subdivise en une sous-chambre amont C1, et en une sous-chambre aval C2, communiquant respectivement avec un orifice d'entrée E, et avec un orifice de sortie S, ce dernier présentant un étranglement par rapport à la section de la chambre C.

Un alésage fileté A communique avec la sous-chambre C2, et une vis V est montée dans le filetage de cet alésage A avec un léger jeu.

Une pompe à vide P connectée à l'alésage A permet d'aspirer l'air qui se trouve dans le jeu séparant la vis V de son alésage, et ainsi de créer une dépression à l'intérieur de la sous-chambre aval C2.

A l'intérieur de la chambre C, et s'étendant sur sensiblement toute la longueur de cette chambre, se trouvent deux arbres 1 a, 1 b, connectés à un ensemble de moto-réduction 3.

Cet ensemble de moto-réduction peut être réglé de manière à faire tourner les deux arbres dans le même sens, ou bien dans le sens contraire.

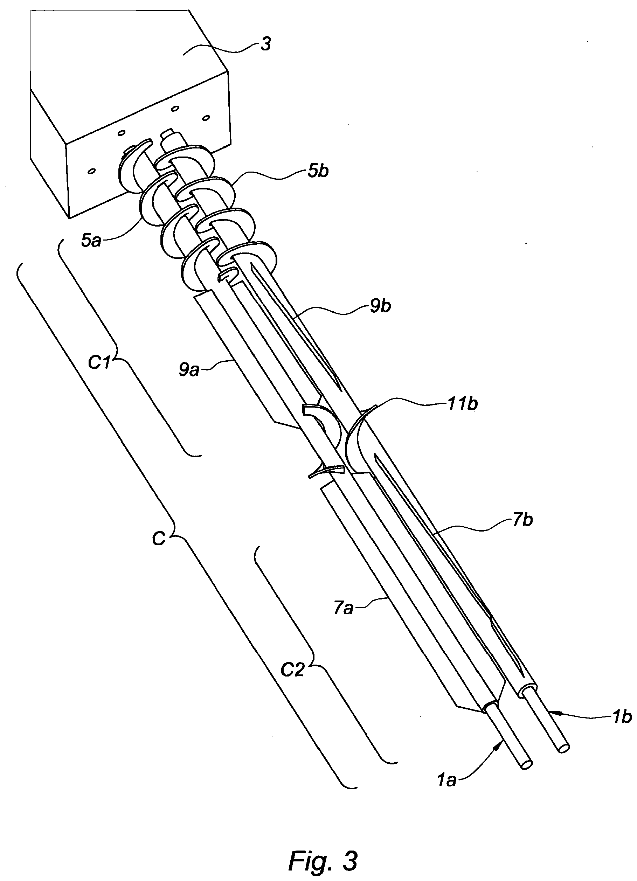

En se reportant plus précisément à la figure 3, on peut voir que chaque arbre 1 a, 1 b, supporte d'une part des organes de convoyage 5a, 5b, placés dans la sous-chambre amont C1 au droit de l'entrée E, et d'autre part des organes de pétrissage 7a, 7b, placés dans la sous-chambre aval C2.

Les organes de convoyage 5a, 5b, peuvent par exemple prendre la forme de vis sans fin, et les organes de pétrissage 7a, 7b, la forme de plats de pétrissage, comme cela est représenté à la figure 3.

L'idée générale est que les organes de convoyage 5a, 5b, présentent un pas nettement inférieur à celui des organes de pétrissage 7a, 7b, de manière que ces organes puissent assurer leurs fonctions respectives de convoyage et de pétrissage.

De manière optionnelle, comme cela est représenté à la figure 3, on peut prévoir des plats additionnels de pré-pétrissage 9a, 9b, disposés dans la sous-chambre C1 entre les organes de convoyage 5a, 5b, et les organes de pétrissage 7a, 7b.

On peut en outre prévoir, également et de manière optionnelle, des vis sans fin à pas inversé 11 a, 11b, disposées juste en amont des plats de pétrissage 7a, 7b, c'est-à-dire juste à l'entrée de la sous-chambre de pétrissage C2.

De manière alternative, et non représentée, on pourrait aussi remplacer les vis à pas inversé 11 a, 11 b, par des zones où les arbres 1 a, 1 b seraient nus, c'est-à-dire dépourvus de tout organe de convoyage et/ou de mélange.

Comme cela va de soi, étant donné la longueur importante des arbres 1 a, 1 b (typiquement entre 1,50 m et 2 m), on peut prévoir un ou plusieurs paliers à l'intérieur de la chambre C, de manière à assurer le centrage correct de la rotation de ces arbres, et à réduire ainsi tout phénomène de balourd et de vibration.

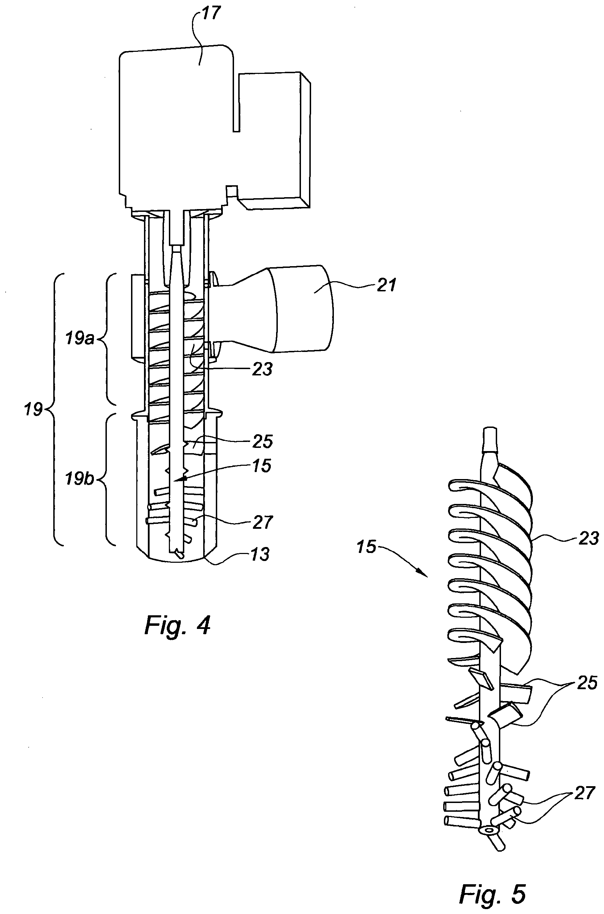

On a représenté sur les figures 4 et 5 un fraseur, c'est-à-dire un appareil de pré-mélange de la farine et d'un ou plusieurs liquides tels que de l'eau, destiné à être placé en amont de la machine à pétrir qui vient d'être décrite.

Plus précisément, la sortie 13 de ce fraseur est destinée à communiquer avec l'entrée E de la machine représentée sur les figures 1 à 3.

Ce fraseur comprend essentiellement un arbre de mélange 15 entraîné par un motoréducteur 17, apte à tourner à l'intérieur d'une chambre 19 comportant d'une part une sous-chambre 19a d'introduction de la farine par une entrée 21, et d'autre part une sous-chambre 19b d'introduction de liquides tels que de l'eau, et de mélange de ces liquides avec la farine.

Plus précisément, comme cela est visible à la figure 5, l'arbre de mélange 15 comporte, de l'amont vers l'aval dans le sens de circulation de la farine, un organe de convoyage pouvant prendre la forme d'une vis sans fin 23, des organes de dispersion du liquide introduit dans la farine, pouvant prendre la forme de lames radiales 25, et des organes d'homogénéisation du mélange ainsi réalisé, pouvant comprendre des doigts radiaux 27.

Le mode de fonctionnement et des avantages de la machine à pétrir en continu selon l'invention résultent directement de la description qui précède.

Pour faire fonctionner cette machine, on met en route les motoréducteurs 3 et 17.

On introduit la farine dans l'entrée 21 du fraseur 14, laquelle est convoyée à l'intérieur de la sous-chambre 19a grâce à la vis sans fin 23.

Lorsque cette farine arrive dans la zone d'introduction de liquide du fraseur, elle est mélangée à du liquide tel que de l'eau (et autres adjuvants liquides éventuels), les lames radiales 25 assurant la bonne dispersion de ce liquide à l'intérieur de la farine.

Les doigts radiaux 27 finalisent le mélange ainsi obtenu, qui arrive alors dans la sous-chambre amont C1 de la machine à pétrir.

Ce mélange est convoyé vers la sous-chambre aval C2 par les deux vis sans fin 5a, 5b, et pré-pétri par les plats 9a, 9b.

Lorsque ce mélange arrive sur les vis à pas inversé 11 a, 11 b, il est ralenti, de sorte qu'il se forme un bouchon de pâte B1 à l'entrée de la sous-chambre aval C2.

Comme par ailleurs la sortie S de la machine présente un étranglement par rapport à la section de la chambre C, il se forme également un bouchon de pâte B2 dans cette sortie.

On obtient donc une zone étanche entre les deux bouchons de pâte B1, B2, de sorte que la pompe à vide P permet de réaliser le vide dans la sous-chambre aval C2.

A noter que la vis V montée avec un jeu dans son alésage A, permet l'aspiration d'air par la pompe P, sans aspiration de la pâte qui reste bloquée par la vis V à l'entrée de l'alésage A.

Le pétrissage de la pâte dans la sous-chambre aval C2 peut ainsi être réalisé de manière continue sous vide, ce qui est parfaitement approprié pour l'obtention de pâte à pain de mie, comme cela était indiqué dans le préambule de la présente description.

A noter que, selon le mode de réalisation, les deux arbres 1 a, 1 b, peuvent tourner dans le même sens, ou bien dans le sens contraire.

A noter également que l'on peut prévoir plus de deux arbres.

A noter également que l'on peut prévoir qu'il y ait non pas des vis à pas inversé 11 a, 11 b, entre les sous-chambres amont C1 et aval C2, mais de simples zones nues sur les arbres 1 a, 1 b : le bouchon de pâte B1 pourrait de même être obtenu, du fait de la très grande différence de pas qui existe entre les plats de pétrissage 7a, 7b (pas de vis très grand), et ceux des vis sans fin 5a, 5b (pas de vis nettement plus petit).

On comprend que l'invention permet, de manière très simple, de faire jouer à chaque arbre 1 a, 1 b, une fonction de convoyage, une fonction de pétrissage, et une fonction de création d'un espace étanche, en limitant le nombre de pièces et d'éléments tournants.

La machine à pétrir en continu selon l'invention, qui est donc d'une conception très simple, est à la fois peu coûteuse à fabriquer et à entretenir.

On notera en particulier que, du fait que l'on prévoit que seule une partie de la chambre C se trouve sous vide, on peut limiter considérablement les encours, c'est-à-dire la quantité de pâte perdue à la fin de chaque cycle de production.

En effet, seule une quantité de pâte équivalente à la contenance de la sous-chambre aval C2 est à jeter, ce qui permet de minimiser les pertes.

A titre indicatif, les longueurs respectives des sous-chambres amont C1 et aval C2 peuvent être de 60 % et 40 %.

Bien entendu, la présente invention n'est nullement limitée aux modes de réalisation décrits et représentés, fournis à titre de simples exemples.

## Revendications

1. Machine à pétrir en continu une pâte pour préparation boulangère ou pâtissière telle que du pain de mie, comprenant :
- une chambre (C) sensiblement tubulaire munie d'une entrée de pâte (E) à pétrir et d'une sortie de pâte (S) pétrie présentant un étranglement, ladite chambre (C) comprenant une sous-chambre amont (C1) communiquant avec ladite entrée (E), et une sous-chambre aval (C2) communiquant avec ladite sortie (S),
- des moyens (P, V) pour créer une dépression dans ladite sous-chambre aval (C2),
- deux arbres (1 a, 1 b) montés rotatifs à l'intérieur de ladite chambre (C), supportant des organes pour convoyer ladite pâte (5a, 5b), disposés dans ladite sous-chambre amont (C1) au droit de l'entrée, et des organes pour pétrir ladite pâte (7a, 7b), disposés dans ladite sous-chambre aval (C2), lesdits organes pour convoyer ladite pâte (5a, 5b) présentant un pas inférieur auxdits organes de pétrissage (7a, 7b),
ladite machine étant **caractérisée en ce qu'** elle comprend des moyens pour former un bouchon de pâte (B1), comprenant une zone d'arbres nus ou une zone de vis à pas inversé (11 a, 11 b), lesdites zones étant prévues entre lesdits organes de convoyage (5a, 5b) et de pétrissage (7a, 7b).

2. Machine selon la revendication 1, dans laquelle lesdits organes de convoyage sont des vis sans fin (5a, 5b), et lesdits organes de pétrissage sont des plats de pétrissage (7a, 7b).

3. Machine selon l'une des revendications 1 ou 2, dans laquelle lesdits moyens de dépression comprennent un alésage fileté (A) communiquant avec ladite chambre aval (C2), une vis (V) montée dans ledit filetage avec un léger jeu, et des moyens d'aspiration de l'air (P) se trouvant dans ce jeu.

## Patentansprüche

1. Maschine zum fortlaufenden Kneten eines Teigs für eine Bäcker- oder Konditorware, wie Toastbrot, folgendes umfassend:
- eine in etwa rohrförmige Kammer (C), die mit einem Eingang für den zu knetenden Teig (E) und einem Ausgang für den gekneteten Teil (S) versehen ist, der einen Engpass aufweist, wobei die besagte Kammer (C) eine vorgelagerte Unterkammer (C1) umfasst, die mit dem besagten Eingang (E) verbunden ist, sowie eine nachgelagerte Unterkammer (C2), die mit dem Ausgang (S) verbunden ist,
- Mittel (P, V) zum Erzeugen eines Unterdrucks in der besagten nachgelagerten Unterkammer (C2),
- zwei Wellen (1a, 1b), die im Inneren der besagten Kammer (C) drehend montiert sind und Elemente zum Befördern des besagten Teigs (5a, 5b) tragen, die in der besagten vorgelagerten Unterkammer (C1) im Bereich des Eingangs angeordnet sind, und Elemente zum Kneten des besagten Teigs (7a, 7b), die in der besagten nachgelagerten Unterkammer (C2) angeordnet sind, wobei die besagten Elemente zum Befördern des besagten Teigs (5a, 5b) eine kleinere Teilung aufweisen, als die besagten Knetelemente (7a, 7b),
wobei die besagte Maschine **dadurch gekennzeichnet ist, dass** sie Mittel zum Bilden eines Teigpfropfens (B1) umfasst, einen Bereich mit freiem Wellenende oder einen Bereich mit Schnecke mit gegenläufigem Gewinde (11a, 11b) umfassend, wobei die besagten Bereiche zwischen den besagten Beförderungselementen (5a, 5b) und Knetelementen (7a, 7b) vorgesehen sind.

2. Maschine nach Anspruch 1, wobei die besagten Beförderungselemente Schnecken (5a, 5b) sind und die besagten Knetelemente Knetplatten (7a, 7b) sind.

3. Maschine nach einem der Ansprüche 1 oder 2, wobei die besagten Unterdruckmittel eine Gewindebohrung (A) umfassen, die mit der besagten nachgelagerten Unterkammer (C2) verbunden ist, eine Schraube (V), die mit einem leichten Spiel in dem Gewinde montiert ist, und Mittel zum Absaugen der Luft (P), die sich in diesem Spiel befindet.

## Claims

1. A machine for continuously kneading a dough for a baking or pastry preparation such as batch bread, comprising:
- a substantially tubular chamber (C) provided with an inlet (E) of dough to be kneaded and an outlet (S) of kneaded paste having a throttling, said chamber (C) comprising an upstream sub-chamber (C1) communicating with said inlet (E), and a downstream sub-chamber (C2) communicating with said outlet (S),
- means (P, V) for creating a vacuum in said downstream sub-chamber (C2),
- two shafts (1a, 1b) rotatably mounted within said chamber (C), supporting members for conveying said dough (5a, 5b), disposed in said upstream sub-chamber (C1) in line with the inlet, and members to knead said dough (7a, 7b), disposed in said downstream sub-chamber (C2), said members for conveying said dough (5a, 5b) having a pitch smaller than said kneading members (7a, 7b),
said machine being **characterized in that it** comprises means for forming a dough plug (B1), comprising an area of bare shafts or an area of reverse pitch screw (11a, 11b), said areas being provided between said conveying (5a, 5b) and kneading (7a, 7b) members.

2. The machine according to claim 1, wherein said conveying members are endless screws (5a, 5b), and said kneading members are kneading plates (7a, 7b).

3. The machine according to any of claims 1 or 2 wherein said vacuum means comprise a threaded bore (A) communicating with said downstream chamber (C2), a screw (V) mounted in said thread with a slight clearance, and air suction means (P) located in this clearance.
